# EUROPEAN PATENT APPLICATION

(11) **EP 0 591 124 A1**
(43) Date of publication of application: **06.04.1994**
(21) Application number: 93870195.0
(22) Date of filing: 29.09.1993
(51) Int. Cl.: C02F 11/12, B01D 24/14

(54) **Device and method for drying sludge**

(30) Priority: 29.09.1992 BE 9200852
(71) Applicant: TREATMENT TECHNIQUES FOR SLUDGES N.V. afgekort SILT N.V., B-8380 Brugge (BE)
(72) Inventor: Christiaens, Jacques, B-8511 Kortrijk Aalbeke (BE); Moerman, Hedwig, B-8791 Waregem Beveren-Leie (BE)
(74) Representative: Pieraerts, Jacques

(57) **Abstract**

The invention relates to a device for drying sludge, characterized in that it is composed of a closed space for the wet sludge, a filter complex adjoining to said space and consisting in essence of at least one layer of filter material in combination with water and/or air pervious tubes (5) on the one hand for receiving the water circulating through the filter complex or, on the other hand, for urging pressurized water and/or air in counter current from a compressor to which said tubes are connected.

## Description

This invention relates to a device for drying sludge.

Recycling sludge and in general soil fractions having a high water content is for different ecological and economical reasons an actual issue. First of all, dumping sides for sludge are getting more and more difficult to find so that there is much interest in recycling this material in a dry form. In many cases, sludge is also highly contaminated a.o. by heavy metals so that a sludge treatment is imposed. This treatment can best of all be performed when the sludge takes in a smaller volume. This is also a reason why drying and dewatering sludge and soil fractions having a high water content has become very actual.

Recycling the solid fraction from sludge loaded with water requires therefore technically very advanced dewatering units. Especially in view of a high speed very specific problems arise which are related to the structure of sludge and to the nature of sludge loaded with water. The accelerated compaction and therefore drying of sludge requires an extremely specific arrangement of dewatering material.

Examples of filter units for filtering water of a swimming pool as disclosed in US-patent No.4,127,485 or intended for the industrial filtration of a liquid such as disclosed in US-patent No. 3,544,457 does not give here the slightest indication for drying an amount of sludge at an optimal speed.

Only the ideal arrangement, in the required sequence, of filter materials can be considered in a large scale method for drying sludge masses with their very specific characteristics.

An object of the invention is therefore to provide a device and a method which enable sludge and similar soil fractions to be dried as quickly as possible and this under circumstances rendering the method technically and economically feasible.

In order to enable this according to the invention, the device for drying sludge according to the invention is characterized in that it is composed of a closed space for the wet sludge, a filter complex adjoining to said space and consisting in essence of at least one layer of filter material in combination with water and/or air pervious tubes.

In a possible embodiment, said tubes are horizontal tubes.

In another embodiment, said tubes are vertical tubes.

A particularly advantageous embodiment is characterized in that, on the one hand, for receiving the water circulating through the filter complex or, on the other hand, for urging pressurized water and/or air in counter current from a compressor to which said tubes are connected.

According to a possible embodiment, said filter complex is disposed in said space.

According to another possible embodiment, said filter complex is disposed out of said space.

In a preferably applied embodiment, said space is equipped with a movable cover and at least one inlet pipe is provided in said space for generating an over pressure in said space.

Still according to the invention, each tube or group of tubes is provided with at least one control valve and on each of said tubes or group of tubes at least one pressure gauge is mounted for measuring respectively an over pressure and an under pressure.

Other details and advantages of the invention will become apparent from the following description of a device for drying sludge and of a method for drying this material by means of this device according to the invention. This description is only given by way of example and does not limit the invention. The reference numerals relate to the annexed figures.

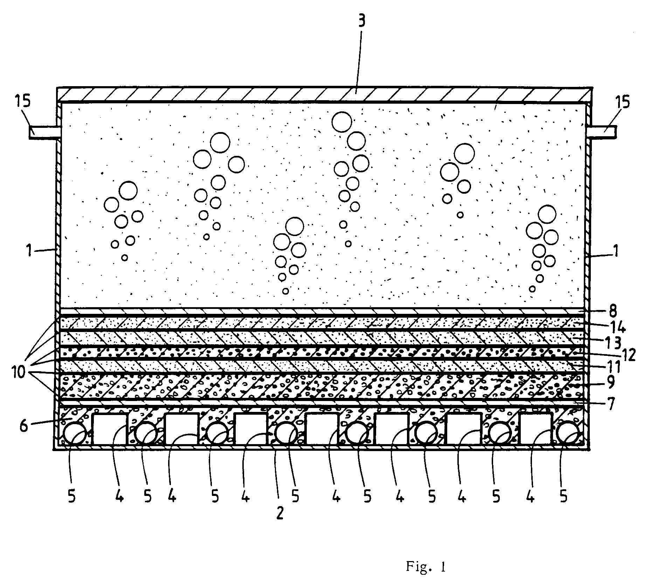

Figure 1 shows schematically the arrangement of a certain type of filter complex in a space or container equipped with a set of horizontal water and/or air pervious tubes.

Figure 2 shows in a very schematic way and according to a perspective view a closed space or container equipped with horizontal and vertical water and/or air pervious tubes.

These figures show therefore schematical representations of a space or container according to the invention.

The following dimensions of a space or container are only given by way of example to give an idea. It is clear that these dimensions can be modified considerably although it is obvious that when the concerned space has to be transported by truck or by train, the dimensions of this space are determined by legal regulations.

It is also clear that the invention is not limited to a space in the shape of a parallelepiped but that this space may also have a cylindrical or a spherical shape.

Still in order to give an idea, the maximum content of a space according to the invention can be estimated at about 180 m³. The space consists preferably of stainless steel, two walls of which are indicated by reference 1 while the bottom has been given reference 2. With 3 there is referred to a lockable cover. As mentioned already earlier, this cover may have any shape and has to be considered as a movable component of the space.

On the bottom 2 a number of U-shaped support profiles 4 are fitted. These support profiles are turned U-shaped profiles between which tubes 5 are provided. These tubes may be disposed both in the longitudinal and in the transverse direction. These tubes 5 are completely surrounded by filter material which may be in the form of pebbles. The layer of pebbles is indicated with reference 6. Above this layer of pebbles, a perforated plate 7 of stainless steel is provided. Above the perforated plate 7, a filter complex is provided which is covered on the top by a second perforated stainless steel plate 8.

It is clear that depending on the nature of the sludge which is to be dried, the structure and the number of filter components forming the filter complex between the perforated plates 7 and 8 may vary within broad limits. In the here described non limiting example, a filter component 9 consisting of pebbles enclosed between two filtering fabrics 10 is situated above the perforated plate 7.

Above this filter component there is a filter component 11 consisting of sand enclosed between two filtering fabrics 10. Preferably, a filter component 12 is subsequently provided consisting of boulders enclosed between the same filtering fabrics. The next filter components 13 and 14 are both built up on the basis of sand enclosed between filtering fabrics 10.

The object of the filter complex is to stop and catch the very small sludge particles. The water fraction flowing through the filter complex is received by different tubes 5. Each tube 5 or each group of tubes 5 is connected to a pump not shown in the figures. This pump acts as a suction pump for receiving and removing the water flowing through the filter complex and for building up afterwards an under pressure whereby the filtration process is enhanced further. The pumps to which the different tubes 5 or groups of tubes are connected, can also be used as pressure pump. In this latter case, there is especially aimed at preventing the filter complex from getting clogged. By urging water and/or air through the tubes 5, the components of the filter complex can be cleaned. On each tube or for each group of tubes 5 there is also installed a pressure gauge for measuring the pressure or respectively the under pressure in the device.

At least one inlet pipe 15 debouches laterally into the space. By means of the already earlier mentioned pumps which are however not shown in the drawings and which are then used as vacuum pumps, there is not only created a vacuum in the space but the largest part of the water is moreover sucked away through the tubes 5 which show in their uppermost part an obliquely cut-out passage.

In function of the characteristics of the sludge to be dried, the required form of drying and the expected percentage of dry material, dry air can either or not be blown in into the space above the compacting sludge mass. The suction of water and air is then stopped and dry air is urged through the tubes 5 by means of a compressor which is not shown in the figures.

In certain cases, depending on the sludge structure, it may be appropriate to branch vertical tubes 5' onto the horizontal tubes 5. They fulfil then the same function as the tubes 5 but they act, on the contrary, over the entire height of these vertical tubes.

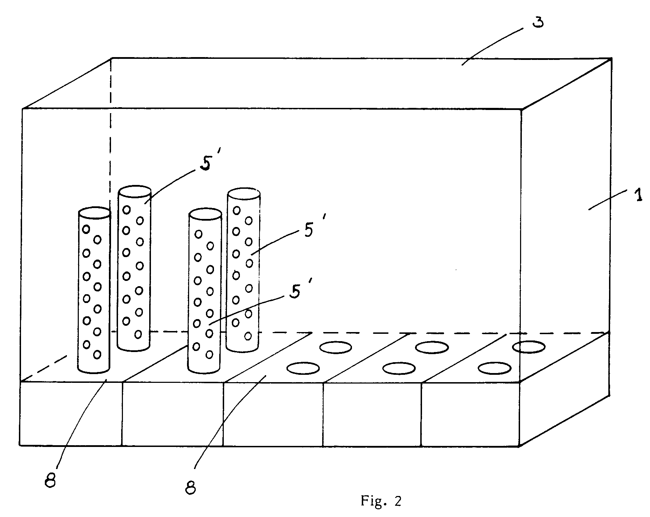

In the vertical tubes 5', it is therefore also possible to create an under pressure respectively an over pressure. This drying process through which the sludge is dewatered is extremely accelerated due to the presence of the complementary vertical tubes 5'. Anyway, certain sludge structures require the presence of these vertical tubes 5'. The vertical tubes can be arranged according to the most various patterns. The schematical figure 2 gives only a possible embodiment thereof.

Vertical tubes 5' pass through the perforated plates 7 and 8 and through the filter complex enclosed there between.

With a space which may show the shapes mentioned in the preamble, a complete drying cycle can be performed in about 48 hours. When the wet sludge is solidified, the dried mass can be removed from the space by means of the "retroscoop" of a crane.

It is clear that this description is only given by way of example and that the structure of the filter complex could be built up in a different way. This goes mainly for the number of superimposed layers of granular material.

## Claims

1. A device for drying sludge, characterized in that it is composed of a closed space for the wet sludge, a filter complex adjoining to said space and consisting in essence of at least one layer of filter material in combination with water and/or air pervious tubes (5) on the one hand for receiving the water circulating through the filter complex or, on the other hand, for urging pressurized water and/or air in counter current from a compressor to which said tubes are connected.

2. A device according to claim 1, characterized in that said filter complex is disposed in said space.

3. A device according to claim 1, characterized in that said filter complex is disposed out of said space.

4. A device according to claim 3, characterized in that said filter complex is entirely or partially removable from said space.

5. A device according to any one of the claims 1-3, characterized in that said tubes (5) are horizontal tubes.

6. A device according to any one of the claims 1-3, characterized in that said tubes (5') are vertical tubes.

7. A device according to any one of the claims 1-3, characterized in that said tubes (5') are vertical tubes which are connected locally over the length of the horizontal tubes (5).

8. A device according to any one of said claims 1-7, characterized in that said tubes (5) pertaining to said filter complex rest upon a bottom plate (2) between turned U-profiles (4) and each tube is embedded in filter material between two U-profiles.

9. A device according to claim 8, characterized in that said turned U-profiles (4) are welded to said bottom plate (2) and their extremities being sealed off in a water and/or air tight manner.

10. A device according to any one of the claims 1-9, characterized in that in said filter complex, a filter component based on filter material enclosed between two filtering fabrics (10) rests upon said turned U-profiles (4) and upon the granular material present between these turned U-profiles.

11. A device according to claim 10, characterized in the filter material are boulders.

12. A device according to claim 10, characterized in that the filter material are pebbles (6).

13. A device according to any one of the claims 10-12, characterized in that a water and/or air pervious element rests upon said filter complex on top of said filter component based on pebbles.

14. A device according to claim 13, characterized in that said water and/or air pervious element is a perforated plate (7).

15. A device according to claim 13, characterized in that said water and/or air pervious element is a metal filter fabric.

16. A device according to claim 1, characterized in that said water and/or air pervious element is a grid.

17. A device according to any one of the claims 10-16, characterized in that in addition to said filter component based on pebbles, said filter complex comprises further at least one filter component based on said enclosed between two filtering fabrics (10).

18. A device according to any one of the claims 10-17, characterized in that said filter complex further comprises at least one filter component (12) based on boulders enclosed between two filtering fabrics (10).

19. A device according to any one of the claims 10-18, characterized in that said filter complex further comprises at least one filter component (13,14) based on sand enclosed between two filtering fabrics (10).

20. A device according to any one of the claims 10-19, characterized in that said filter complex is covered at the top with a water and/or air pervious element.

21. A device according to claim 20, characterized in that said element is a perforated plate (8).

22. A device according to claim 20, characterized in that said element is a metal filtering fabric.

23. A device according to claim 20, characterized in that said element is a grid.

24. A device according to any one of the claims 1-23, characterized in that said space is equipped with a movable cover (3).

25. A device according to any one of the claims 1-24, characterized in that said space is provided with at least one inlet pipe (9) for generating an over pressure in said space.

26. A device according to any one of the claims 1-21, characterized in that all of said tubes (5) have incisions along their upper side.

27. A device according to any one of the claims 1-26, characterized in that said tubes (5) are mutually connected.

28. A device according to claim 25, characterized in that each tube or group of tubes is provided with at least one control valve and that on each of said tubes or group of tubes at least one pressure gauge is mounted for measuring respectively an over pressure and an under pressure.

29. A device according to any one of the claims 1-28, characterized in that said space has the shape of a parallelepiped.

30. A device according to any one of the claims 1-28, characterized in that said space has the shape of a cylinder.

31. A device according to any one of the claims 1-28, characterized in that said space has a spherical shape.

32. A method for drying sludge by making use of a device according one or more of the claims 1-30, which device consists of a closed space for receiving the wet sludge, a filter complex within or outside this closed space, which filter complex comprises a series of water and/or air pervious tubes (5-5'), characterized in that the water originating from the sludge is drained away through said tubes and an under pressure is created afterwards in said tubes and hence below said filter complex.

33. A method according to claim 30, characterized in that an over pressure is built up in said space above the sludge present therein.

34. A method according to either one of the claims 32 and 33, characterized in that water and/or air is urged via said tubes through said filter complex in order to clean the components thereof.

35. A method according to either one of the claims 32 and 33, characterized in that water and/or air is urged in counter current via said tubes (15) through said filter complex in order to clean the components thereof.
